**Europäisches Patentamt**

**European Patent Office**

**Office européen des brevets**

(19)

(11) Veröffentlichungsnummer : **0 138 821**
**B1**

(12) ## EUROPÄISCHE PATENTSCHRIFT

(45) Veröffentlichungstag der Patentschrift :
09.09.87

(21) Anmeldenummer : **84900271.2**

(22) Anmeldetag : **24.12.83**

(86) Internationale Anmeldenummer :
**PCT/DE 83/00218**

(87) Internationale Veröffentlichungsnummer :
**WO/8403778 (27.09.84 Gazette 84/23)**

(51) Int. Cl.⁴ : **G 02 F   1/133**, G 09 F   9/35,
**G 02 B  27/28**

(54) ANORDNUNG ZUR ENTSPIEGELUNG VON FLÜSSIGKRISTALLANZEIGEN.

(30) Priorität : **19.03.83 DE 3309970**

(43) Veröffentlichungstag der Anmeldung :
**02.05.85 Patentblatt 85/18**

(45) Bekanntmachung des Hinweises auf die Patenterteilung : **09.09.87 Patentblatt 87/37**

(84) Benannte Vertragsstaaten :
**DE FR GB SE**

(56) Entgegenhaltungen :
**DE-A- 2 353 485**
**DE-A- 2 360 486**
**DE-A- 2 364 951**
**DE-A- 2 934 478**
**DE-A- 3 035 282**
**FR-A- 2 212 559**
**US-A- 4 007 979**

(73) Patentinhaber : **ROBERT BOSCH GMBH**
**Robert-Bosch-Platz 1**
**D-7016 Gerlingen-Schillerhöhe (DE)**

(72) Erfinder : **ZIEGLER, Wolfgang**
**Philipp-Reis-Str. 52**
**D-8510 Fürth (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Anordnung zur Entspiegelung von Flüssigkristallanzeigen nach der Gattung des Hauptanspruchs. Aus der DE-A-29 34 478 ist bereits eine Flüssigkristallanzeige bekanntgeworden, die zur Verwendung in Kraftfahrzeugen teilweise entspiegelt ist. Bei der bekannten Anordnung ist zur Entspiegelung der Anzeige eine Abdeckscheibe mit einem Polarisationsfilter versehen. Durch die schräge Anordnung der Abdeckscheibe wird das von außen auf die Anzeige gelangende Licht teilweise reflektiert und der reflektierte Lichtanteil wird nach unten abgelenkt. Ein anderer Teil des Lichtes wird durch den Polarisationsfilter absorbiert. Der restliche Anteil von etwa 40 % gelangt jedoch zur Flüssigkristallzelle und wird dort an der Glasoberfläche teilweise reflektiert. Diese Reflexion führt bei ungünstigem Lichteinfall zur Unleserlichkeit der Anzeige.

Es ist ferner aus der vorgenannten Veröffentlichung bekannt, vorn an der Flüssigkristallzelle eine Zwischenschicht aufzukleben, auf die dann der Polarisationsfilter in gewölbter Form aufgebracht wird. Dort ist die Abdeckscheibe mit Abstand zur Flüssigkristallzelle parallel dazu angeordnet. Diese Lösung hat den Nachteil, daß sie technologisch schwer beherrschbar ist und bei Großdisplays ein sehr hohes Gewicht der Anzeigeeinheit bedingt.

Darüber hinaus ist bereits vorgeschlagen worden, die Abdeckscheibe mit einem Zirkularpolarisator zu versehen, der mit einem vorn auf der Flüsigkristallzelle aufgebrachten Polarisator zusammenwirkt und eine Reflexion des störenden Lichtes nahezu vollständig verhindert. Diese Lösung hat jedoch den Nachteil, daß auch das für die Anzeige benötigte Licht am Zirkularpolarisator der Abdeckscheibe zum großen Teil absorbiert wird. Damit ist auch die Helligkeit der Anzeige mit beeinträchtigt.

Die DE-A-2 364 951 beschreibt eine Anordnung zur Verminderung von Reflexionen bei einer Flüssigkristallzelle, die zwei Zirkularpolarisatoren, bestehend aus je einem Linearpolarisator und einem λ/4-Plättchen, sowie auf der Seite des Betrachters eine Streuscheibe aufweist. Diese Anordnung hat jedoch den Nachteil, daß sie von außen eindringendes Fremdlicht vollkommen vernichtet, so daß dieses Fremdlicht nicht zur Vergrößerung des Kontrastes beitragen kann.

Mit der vorliegenden Lösung wird angestrebt, daß eine Reflexion des von außen auf die Anzeige fallenden, störenden Lichtes verhindert wird, ohne dabei die Helligkeit der Anzeige zu beeinträchtigen, wobei in die Zelle eindringendes Fremdlicht zur Erhöhung des Kontrastes der Anzeige eingesetzt wird.

Die erfindungsgemäße Anordnung mit den kennzeichnenden Merkmalen des Hauptanspruchs hat den Vorteil, daß alles von vorn auf die Anzeige fallende Licht im Falle der Nichtansteuerung der Zelle nach der Reflexion beim erneuten Durchgang durch den Zirkularpolarisator praktisch vollständig absorbiert wird, so daß die Anzeige als schwarze Fläche erscheint.

Durch die Tatsache, daß an der Rückseite der Flüssigkristallanzeige hinter dem linearen Rückpolarisator ein teildurchlässiger, diffus reflektierender Reflektor, im folgenden Transflektor genannt, aufgebracht ist, kann das zur Anzeige benötigte Licht hinter der Flüssigkristallzelle installiert werden und es tritt nur in den Bereichen der angesteuerten Anzeigeelemente durch die Flüssigkristallzelle hindurch. Da außerdem im Bereich der angesteuerten Anzeigeelemente das von vorn auf die Flüssigkristallzelle fallende Licht am Transflektor reflektiert wird, läßt sich mit dieser Lösung ein stärkerer Kontrast für die Anzeige erreichen, indem das von vorn kommende Licht die Helligkeit der Anzeige erhöht.

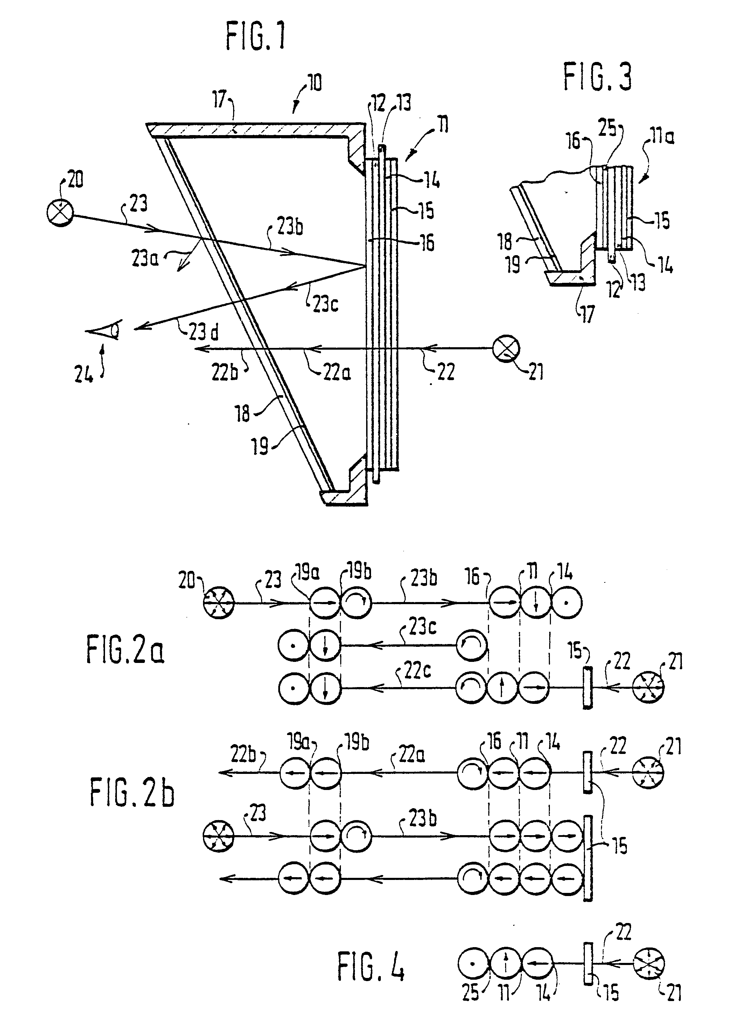

Zwei Ausführungsbeispiele der Erfindung sind in der Zeichnung dargestellt und in der nachfolgenden Beschreibung näher erläutert. Es zeigen Figur 1 eine Flüssigkristallanzeige mit einer λ/4-Verzögerungsfolie und Figur 2 zeigt die Polarisation des Lichtes im Strahlengang a) bei nicht angesteuerter und b) bei angesteuerter Flüssigkristallanzige nach Figur 1, Figur 3 zeigt ein weiteres Ausführungsbeispiel der Erfindung und Figur 4 zeigt die entsprechende Polarisation des Lichtes.

In Figur 1 ist eine Flüssigkristallanzeige für ein Fahrzeug mit 10 bezeichnet. Sie enthält eine LCD-Zelle 11, bei der die Flüssigkristallsubstanz in üblicher Weise zwischen zwei mit Elektroden bedampfte Glasplatten 12, 13 eingeschlossen ist und mit der verschiedene Größen und Daten des Kraftfahrzeuges angezeigt werden können. An der Rückseite der LCD-Zelle 11 ist auf der Glasplatte 13 ein Linearpolarisator 14 und dahinter ein Transflektor 15 aufgebracht. Vorn auf der LCD-Zelle 11 ist auf der Glasplatte 12 eine λ/4-Verzögerungsfolie 16 mit optischem Kitt aufgebracht. Die LCD-Zelle 11 ist in einem Ausschnitt in der Rückwand eines Gehäuses 17 befestigt. An der Vorderseite des Gehäuses 17 ist schräg zur LCD-Zelle 11 eine Abdeckscheibe 18 befestigt, die an ihrer Rückseite einen Zirkularpolarisator 19 trägt. Das störende Fremdlicht wird in Figur 1 durch eine Lampe 20 dargestellt, während das zur Anzeige benötigte Licht durch eine Weitere Lampe 21 hinter der LCD-Zelle 11 dargestellt ist. Während der von dieser Lichtquelle ausgehende Strahl mit 22 bezeichnet, ist, wird der Lichtstrahl des störenden Fremdlichtes mit 23 bezeichnet. Der Fahrer des Kraftfahrzeuges ist durch ein Auge 24 vor der Anzeige 10 symbolisch dargestellt.

In Figur 2 ist jeweils die Umwandlung der Lichtstrahlen 22 und 23 im Bereich der Anzeige 10 symbolisch dargestellt, wobei Figur 2a den Verlauf des Lichtes bei nicht angesteuerter LCD-Zelle 11 und Figur 2b den Verlauf des Lichtes bei angesteuerter LCD-Zelle 11 zeigt. Der Lichtstrahl 23 des störenden Fremdlichtes 20 gelangt zunächst auf die Oberfläche der Abdeckplatte 18, an der ein Teil 23a von etwa 5 % reflektiert wird. Durch die Neigung der Abdeckscheibe 18 wird gewährleistet, daß der reflektierte Anteil 23a nach unten gegen einen dunklen Bereich im Kraftfahrzeug reflektiert wird, so daß er vom Fahrer 24 nicht wahrgenommen werden kann. Der nichtreflektierte Anteil fällt durch die Abdeckscheibe 18 auf den Zirkularpolarisator 19, der bekanntlich aus einem Linearpolarisator 19a und einer λ/4-Verzögerungsfolie 19b besteht. Ein Anteil von etwa 50 % des Lichtes wird vom Zirkularpolarisator 19 absorbiert und der restliche Anteil wird in zirkularpolarisiertes Licht umgewandelt. Dieser Anteil 23b gelangt nun zur LCD-Zelle 11. Durch die λ/4-Verzögerungsfolie 16 wird nun ein Teil des Lichtstrahles 23b in Linearpolarisiertes Licht umgewandelt, welches von der nicht angesteuerten LCD-Zelle 11 um 90° gedreht und vom Rückpolarisator 14 absorbiert wird. Der restliche Teil des Lichtes 23b wird an der λ/4-Verzögerungsfolie 16 reflektiert und dabei in entgegengesetzter Drehrichtung zirkularpolarisiert. Dieser reflektierte Teil 23c des Lichtstrahles 23 trifft nun auf die Rückseite des Zirkularpolarisators 19. Er wird dort durch dessen λ/4-Verzögerungsfolie 19b zunächst linear polarisiert und dann durch dessen Linearpolarisator 19a praktisch vollständig absorbiert, da dessen Polarisationsebene um 90° gegenüber der Polarisationsebene des Lichtstrahles 23c gedreht ist. Das aus der Abdeckscheibe 18 noch heraustretende Licht 23d von weit unter 1 % ist vom Betrachter auch bei einer starken Lichtquelle 20 nicht mehr wahrnehmbar.

Der Lichtstrahl 22 der Lichtquelle 21 für die Ausleuchtung der LCD-Anzeige 11 gelangt zunächst durch den Transflektor 15 auf den Linearpolarisator 14. Ein Teil des Lichtes wird hier absorbiert während der andere Teil linear polarisiert wird. Das linear polarisierte Licht wird beim Durchgang durch die LCD-Zelle 11 in seiner Polarisationsrichtung um 90° gedreht und im weiteren Verlauf, von der λ/4-Folie 16 in zirkularpolarisiertes Licht umgewandelt. Der Drehsinn der Polarisationsebene und der weitere Verlauf des Lichtstrahles 22c entspricht dem des Strahls 23c.

Werden nun durch Anlegen einer Spannung an die Elektroden bestimmte Anzeigeelemente der LCD-Zelle 11 angesteuert, so werden in bekannter Weise die Flüssigkristalle der LCD-Zelle 11 in den angesteuerten Bereichen so ausgerichtet, daß sie die Polarisationsebene von linearpolarisiertem Licht nicht mehr drehen. Gemäß Figur 2b gelangt nun das von der Lichtquelle 21 hinter der LCD-Zelle 11 ausgehende Licht 22 über den Transflektor 15 zum Linearpolarisator 14, es wird dort linearpolarisiert und gelangt nun durch die Flüssigkristallzelle 11 hindurch zur λ/4-Verzögerungsfolie 16. Dort wird das Licht zirkularpolarisiert und zwar mit einem Drehsinn der zirkularen Polarisation längs der Ausbreitungsrichtung wie der Lichtstrahl 23b. Das zirkularpolarisierte Licht 22a gelangt nun auf den Zirkularpolarisator 19 an der Abdeckscheibe 18, wo es nahezu verlustlos

über die λ/4-Verzögerungsfolie 19b und den Linearpolarisator 19a in linearpolarisiertes Licht 22b umgewandelt wird, welches an der Abdeckscheibe 18 vorn austritt und damit für den Fahrer 24 sichtbar ist. Das Licht 23 der störenden Lichtquelle 20 wird — wie bereits oben erläutert — durch den Zirkularpolarisator 19 an der Abdeckscheibe 18 in zirkularpolarisiertes Licht 23b umgewandelt, durch die λ/4-Verzögerungsfolie 16 zum Teil reflektiert, wobei das reflektierte Licht, wie erwähnt, vom Zirkularpolarisator 19 absorbiert wird. Der nichtreflektierte, von der λ/4-Verzögerungsfolie 16 in linearpolarisiertes Licht umgewandelte Anteil wird nun an den angesteuerten Bereichen der LCD-Zelle 11 ohne Drehung durchgelassen und gelangt über den entsprechend ausgerichteten Linearpolarisator 14 auf den Transflektor 15. Dieser Lichtanteil wird hier reflektiert und gelangt wiederum durch die LCD-Zelle 11 auf die λ/4-Verzögerungsfolie 16. Hier wird das Licht in die gleiche Drehrichtung wie das Licht 22 der Lichtquelle 21 zirkularpolarisiert. Von dort gelangt es in gleicher Weise auch durch den Zirkularpolarisator 19 an der Abdeckscheibe 18 und es wird damit für den Fahrer 24 sichtbar. Da die nicht angesteuerten Bereiche der LCD-Zelle 11 dem Fahrer 24 schwarz erscheinen, ergibt sich bei dieser Lösung ein guter Kontrast für die Anzeige, der sich je nach Intensität des Fremdlichtes 20 noch verbessern läßt. Dies ist besonders vorteilhaft, da mit zunehmender Helligkeit in der Umgebung des Fahrers 24 das Ablesen der Anzeige durch den Adaptationszustand der Augen beeinträchtigt wird.

In Figur 3 ist der Ausschnitt einer Flüssigkristallanzeige gemäß Figur 1 dargestellt, bei der jedoch die λ/4-Verzögerungsfolie 16 gemeinsam mit einer linearpolarisierenden Schicht 25 vorn vor der vorderen Glasplatte 12 der LCD-Zelle 11 angeordnet ist. Die λ/4-Verzögerungsfolie 16 bildet hier gemeinsam mit der linearpolarisierenden Schicht 25 einen Zirkularpolarisator, wobei die linearpolarisierende Schicht 25 auf die vordere Oberfläche der Glasplatte 12 der LCD-Zelle 11 aufgebracht ist und die λ/4-Verzögerungsfolie 16 der Abdeckscheibe 18 zugewandt ist. Die Polarisationsebene der linearpolarisierenden Schicht 25 muß dabei mit der Polarisationsebene des Linearpolarisators 14 übereinstimmen. In diesem Fall verläuft das Licht des Strahles 23 der Lichtquelle 20 in Figur 1 in gleicher Weise, wie in Figur 2 dargestellt ist. Das an der Oberfläche der λ/4-Folie 16 reflektierte Licht der Lichtquelle 20 wird wie oben ausgeführt, vom Zirkularpolarisator 19 absorbiert. Der Strahlenverlauf des Lichtes der Lichtquelle 21 ist für den Fall eines angesteuerten Segmentes ebenfalls gleich dem der Anordnung in Figur 1 (siehe Figur 2b). Der Strahlenverlauf für den nicht angesteuerten Zustand der Flüssigkristallschicht ist dagegen in Figur 4 erklärt. Das Licht der Lichtquelle 21 wird von dem Linearpolarisator 14 linear polarisiert. Beim Durchgang durch die Flüssigkristallzelle 11 wird die Polarisationsebene des Lichtes um 90° gedreht und das Licht wird somit von dem Frontpolarisator 25, der parallel zum Polarisator 14 angeordnet ist, absorbiert.

Der Kontrast der Anzeige in dieser Anordnung ist höher als der in Anordnung der Figur 1, da der Linearpolarisator näherungsweise aselektiv ist und das Licht durch die Flüssigkristallzelle 11 der Lampe 21 im nicht angesteuerten Zustand zu einem sehr hohen Prozentsatz absorbiert, wogegen die λ/4-Verzögerungsfolie naturgemäß wellenabhängig und dadurch die zirkulare Polarisation des Lichtes des für diese Betrachtung maßgeblichen Strahles 22a nicht vollständig gewährleistet ist. Als Folge hiervon ist die Absorption im Zirkularpolarisator 19 nur unvollständig.

**Patentansprüche**

1. Anordnung zur Entspiegelung von TN-Flüssigkristallanzeigen mit einer Flüssigkristallzelle, einem, vom Betrachter her gesehen, dahinter angeordneten Linearpolarisator sowie einem davor angeordneten Zirkularpolarisator und einer mit Abstand von der Flüssigkristallzelle angeordneten Abdeckscheibe, dadurch gekennzeichnet, daß vorn auf der Flüssigkristallzelle (11, 11a) eine λ/4-Verzögerungsfolie (16) angeordnet ist, die mit dem vor der Flüssigkristallzelle (11) auf der Abdeckscheibe (18) aufgebrachten Zirkularpolarisator (19), der aus einem Linearpolarisator (19a) und einer zellenseitig darauf angeordneten λ/4-Folie (19b) besteht, zusammenwirkt, wobei die Abdeckscheibe (18) schräg zu der Flüssigkristallzelle (11, 11a) angeordnet ist, und daß auf der Rückseite der Flüssigkristallzelle (11, 11a) hinter dem Linearpolarisator (14) ein teildurchlässiger, diffus reflektierender Reflektor (Transflektor) (15) aufgebracht ist.

2. Anordnung nach Anspruch 1, dadurch gekennzeichnet, daß die vorn auf der Flüssigkristallzelle (11a) angeordnete λ/4-Verzögerungsfolie (16) mit einer linearpolarisierenden Schicht (25) als Zirkularpolarisator kombiniert ist.

3. Anordnung nach Anspruch 2, dadurch gekennzeichnet, daß die linearpolarisierende Schicht (25) auf die vordere Oberfläche der Flüssigkristallzelle (11a) aufgebracht ist und die λ/4-Verzögerungsfolie (16) der Abdeckscheibe (18) zugewandt ist.

**Claims**

1. Arrangement for the dereflection of TN liquid crystal displays with a liquid crystal cell, a linear polarizer disposed behind the latter as seen by the observer, as well as a circular polarizer disposed in front of the same and a cover plate disposed at a spacing from the liquid crystal cell, characterized in that in front on the liquid crystal cell (11, 11a) there is disposed a λ/4 retarder foil (16), which cooperates with the circular polarizer (19), which is attached to the cover plate (18) in front of the liquid crystal cell (11) and which consists of a linear polarizer (19a) and a λ/4 foil (19b) disposed thereon on the cell side, the cover plate (18) being disposed obliquely in relation to the liquid crystal cell (11, 11a), and in that a partially transmitting, diffusely reflecting reflector (transflector) (15) is attached on the rear surface of the liquid crystal cell (11, 11a) behind the linear polarizer (14).

2. Arrangement according to Claim 1, characterized in that the λ/4 retarder foil (16) which is disposed in front on the liquid crystal cell (11a) is combined with a linearly polarizing layer (25) as circular polarizer.

3. Arrangement according to Claim 2, characterized in that the linearly polarizing layer (25) is attached to the front surface of the liquid crystal cell (11a), and the λ/4 retarder foil (16) faces the cover plate (18).

**Revendications**

1. Dispositif de suppression des reflets d'affichage à cristaux liquides TN avec une cellule de cristaux liquides, et vu à partir de l'observateur, un polarisateur linéaire disposé derrière cette cellule ainsi qu'un polarisateur circulaire disposé devant cette cellule et une glace de recouvrement disposée à une certaine distance de la cellule de cristaux liquides, dispositif caractérisé en ce qu'un film de retard λ/4 (16) est disposé vers l'avant sur la cellule de cristaux liquides (11, 11a), ce film coopérant avec le polarisateur circulaire (19) déposé en avant de la cellule de cristaux liquides (11) sur la glace de recouvrement (18), polarisateur circulaire constitué d'un polarisateur linéaire (19a) et d'un film λ/4 (19b) disposé sur ce polarisateur côté cellule, la glace de recouvrement (18) étant disposée obliquement par rapport à la cellule de cristaux liquides (11, 11a), tandis que sur la face arrière de la cellule de cristaux liquides (11, 11a) derrière le polarisateur linéaire (14) est déposé un réflecteur partiellement transparent réfléchissant de façon diffuse (transflecteur) (15).

2. Dispositif selon la revendication 1, caractérisé en ce que le film de retard λ/4 (16) disposé en avant sur la cellule de cristaux liquides (11a) est combiné avec une couche (25) polarisant linéairement pour jouer le rôle de polarisateur circulaire.

3. Dispositif selon la revendication 2, caractérisé en ce que la couche polarisant linéairement (25) est déposée sur la surface antérieure de la cellule de cristaux liquides (11a) et que le film de retard λ/4 (16) est en regard de la glace de recouvrement (18).

FIG.1

FIG. 3

FIG.2a

FIG.2b

FIG. 4